# EUROPÄISCHE PATENTANMELDUNG

(11) **EP 4 461 399 A1**
(43) Veröffentlichungstag der Anmeldung: **13.11.2024**
(21) Anmeldenummer: 24162839.5
(22) Anmeldetag: 12.03.2024
(51) Int. Cl.: B01D 61/02, B01D 61/08, B01D 61/12

(54) **MOBILE WASSERAUFBEREITUNGSANLAGE ZUM ERZEUGEN VON TRINKWASSER IN EINEM KATASTROPHENGEBIET**

(30) Priorität: 23.03.2023 DE 102023107305
(71) Anmelder: Kärcher Futuretech GmbH, 71409 Schwaikheim (DE)
(72) Erfinder: Hermann, Axel, 71364 Winnenden (DE); Weible, Frank, 71364 Winnenden (DE)
(74) Vertreter: Witte, Weller & Partner Patentanwälte mbB

(57) **Zusammenfassung**

Eine mobile Wasseraufbereitungsanlage (10) zum Erzeugen von Trinkwasser in einem Katastrophengebiet besitzt einen Anlagenzulauf (12) zum Zuführen von Rohwasser und einen ersten Anlagenausgang (14) zum Entnehmen von gereinigtem Wasser. Ein erstes Umkehrosmosemodul (18) besitzt einen ersten Eingang (18a), einen ersten Permeatausgang (18b) und einen ersten Konzentratausgang (18c). Ein zweites Umkehrosmosemodul (20) besitzt einen zweiten Eingang (20a), einen zweiten Permeatausgang (20b) und einen zweiten Konzentratausgang (20c). Ein drittes Umkehrosmosemodul (22) besitzt einen dritten Eingang (22a), einen dritten Permeatausgang (22b) und einen dritten Konzentratausgang (22c). Die Anlage (10) besitzt ferner ein erstes Sperrventil (30) und ein zweites Sperrventil (32). Der Anlagenzulauf (12) ist mit dem ersten Eingang (18a) verbunden , um das erste Umkehrosmosemodul (18) mit Rohwasser zu speisen. Der Anlagenzulauf (12) ist ferner mit dem zweiten Eingang (20a) verbunden , um das zweite Umkehrosmosemodul (20) wahlweise mit Rohwasser zu speisen. Der erste Konzentratausgang (18c) ist mit dem zweiten Konzentratausgang (20c) und mit dem dritten Eingang (22a) verbunden, so dass der dritte Eingang (22a) mit Konzentrat aus dem ersten Umkehrosmosemodul (18) und mit Konzentrat aus dem zweiten Umkehrosmosemodul (20) gespeist werden kann. Der erste Permeatausgang (18c) ist ferner mit dem dritten Permeatausgang (22c) und über das erste Sperrventil (30) mit dem zweiten Eingang (20a) verbunden. Der zweite Permeatausgang (20b) ist mit dem Anlagenausgang (14) und ferner über das zweite Sperrventil (32) mit dem ersten Permeatausgang (18b) und mit dem dritten Permeatausgang (22b) verbunden. Eine solche Anlage ermöglicht vorteilhaft ein schnelles Umschalten zwischen einem Single-Pass Betrieb oder einem Double-Pass Betrieb.

## Beschreibung

Die vorliegende Erfindung betrifft eine mobile Wasseraufbereitungsanlage zum Erzeugen von Trinkwasser aus verschmutztem und/oder stark salzhaltigen Oberflächenwasser und insbesondere eine mobile Umkehrosmoseanlage mit mehreren Umkehrosmosemodulen, die wahlweise einen Single-Pass Betrieb oder einen Double-Pass Betrieb ermöglichen.

Es gibt mobile Wasseraufbereitungsanlagen für Einsätze in Katastrophengebieten, etwa nach einem Erdbeben oder einer Überschwemmung. EP 1 690 579 A1 beschreibt beispielsweise eine Filteranordnung und ein Verfahren, die sich zur Vorreinigung von Wasser aus Flüssen, Seen oder Meeren bei einer mobilen Trinkwasseraufbereitungsanlage eignen. Die Filteranordnung liefert ein Filtrat, mit dem eine Umkehrosmoseanlage zur Trinkwassererzeugung gespeist werden kann. EP 1 690 579 A1 beschreibt insbesondere eine Anlage mit drei Filtereinheiten, die zeitgleich oder wechselweise verwendet werden können, um schmutziges Rohwasser als Vorstufe für eine nachfolgende Umkehrosmoseanlage zu filtern. Die Umkehrosmoseanlage ermöglicht die Gewinnung von keimfreiem Trinkwasser einschließlich der Entsalzung und/oder Entfernung von gelösten Schadstoffen wie Schwermetallen etc.

Umkehrosmoseanlagen werden üblicherweise im sogenannten Cross Flow betrieben. Dabei wird das eventuell vorgefilterte Rohwasser unter einem gewissen Druck einer semipermeablen Membran zugeführt. Ein Teil des zugeführten Rohwassers diffundiert aufgrund der Druckdifferenz durch die Membran und bildet einen ersten ausgangsseitigen Teilstrom, das sogenannte Permeat. Der nicht durch die Membran diffundierende Teil des zugeführten Rohwassers, das sogenannte Konzentrat oder Retentat, bildet einen zweiten ausgangsseitigen Teilstrom. Permeat ist also das Wasser, das die Membranfläche passiert hat. Konzentrat/Retentat ist der Anteil, der die Membranfläche nicht passiert hat und als eine Art Abwasser die zurückgehaltenen, konzentrierten Stoffe von dem Membranelement abführt.

Zur Erhöhung der Permeatmenge werden üblicherweise eine Vielzahl von Membranelementen kombiniert und zu mehrstufigen Membranblöcken verbunden. Dabei spricht man von einer "Konzentratstufung", wenn der aus einem ersten Membranelement austretende Konzentratstrom als Rohwasser (Feed) einem nachfolgenden weiteren Membranelement zugeführt wird. Das aus den einzelnen Membranstufen austretende Permeat wird in einer gemeinsamen Leitung gesammelt und zur Nutzung bereitgestellt. In diesem Fall hat das Permeat aus mehreren Umkehrosmosemodulen jeweils nur einmal eine Membranfläche passiert. Daher kann man einen solchen Betrieb auch als Single-Pass Betrieb bezeichnen.

Wenn nicht die Menge an Permeat im Vordergrund steht, sondern vor allem eine höhere Wasserqualität, d.h. ein reineres Permeat gewünscht ist, werden mehrere Membranelemente in einer "Permeatstufung" verbunden. In diesem Fall wird der aus einem ersten Umkehrosmosemodul austretende Permeatstrom als Rohwasser (Feed) einem oder mehreren weiteren Membranelementen zugeführt. Das aus dem weiteren Membranelement austretende Permeat hat somit mehrfach eine Membranfläche passiert. Dementsprechend kann man einen solchen Betrieb auch als Double-Pass Betrieb bezeichnen, wobei Letzteres vielfache Membrandurchläufe einschließt. Im Double-Pass Betrieb wird das Konzentrat aus der ersten Membranstufe und das Konzentrat aus der zweiten Membranstufe typischerweise in einer gemeinsamen Leitung gesammelt und abgeführt oder dem Eingang der Umkehrosmoseanlage erneut als Rohwasser für eine weitere Aufbereitung zugeführt.

Stationäre Großanlagen werden üblicherweise für eine konkrete Anforderung gebaut und somit entweder konzentratgestuft bzw. für einen Single-Pass Betrieb oder permeatgestuft bzw. für einen Double-Pass Betrieb ausgeführt. Ein Single-Pass Betrieb ist insbesondere bei vorwiegend salzhaltigem Rohwasser geeignet, ein Double-Pass Betrieb bei stark und/oder vielfach verschmutztem Oberflächenwasser. Bei mobilen Umkehrosmoseanlagen ist die Rohwasserbeschaffenheit in der Regel unbekannt und es ist daher nicht von vornherein klar, ob für die Erreichung einer geforderten Permeatqualität ein einmaliges Passieren einer Membranfläche ausreicht oder ob ein mehrfaches Passieren erforderlich ist. Daher ist es wünschenswert, eine mobile Wasseraufbereitungsanlage mit einer mehrstufigen Umkehrosmoseanlage so auszubilden, dass vor Ort zwischen einem Single-Pass Betrieb oder einem Double-Pass Betrieb gewechselt werden kann. Da mobile Anlagen häufig in Krisensituationen und bei unterschiedlichsten Rahmenbedingungen eingesetzt werden, ist zudem ein einfacher und schneller, aber auch prozesssicherer Wechsel zwischen den Betriebsarten wünschenswert.

Grundsätzlich besteht bei einer Permeatstufung die Möglichkeit, das Permeat aus der ersten Stufe nahezu drucklos austreten zu lassen und den erforderlichen Prozessdruck für die zweite Membranstufe über eine nachfolgende Druckerhöhungspumpe zu erzeugen, die zwischen den gestuften Umkehrosmosemodulen angeordnet ist. In einem solchen Fall muss mit dem ersten Umkehrosmosemodul so viel Permeat erzeugen werden, dass die Pumpe für die zweite Stufe damit betriebssicher gespeist werden kann. Typischerweise wird dann für jede Membranstufe eine eigene Pumpe am Speiseeingang, ein Regelventil am Konzentratausgang und ein Volumenstromsensor für die Betriebsregelung jeder einzelnen Stufe benötigt. Bei mobilen Anlagen sind allerdings die Baugröße und das Gewicht von Bedeutung, weshalb es wünschenswert ist, die Anzahl und Größe der verwendeten Komponenten zu reduzieren.

Prinzipiell kann ein permeatgestufter Double-Pass Betrieb mit nur einer eingangsseitigen Pumpe realisiert werden. In diesem Fall muss die Verbindungsleitung zwischen dem Permeatausgang des ersten Umkehrosmosemoduls und dem Eingang des stromabwärts liegenden zweiten Umkehrosmosemoduls allerdings unter einem relativ hohen Druck stehen und dementsprechend aufwändig ausgeführt sein. Außerdem ist die Gesamtmenge an erreichbarem Permeat in diesem Fall geringer als im erstgenannten Fall mit jeweils einer separaten Pumpe am Eingang jedes Umkehrosmosemoduls, weil die Druckdifferenz über dem ersten Membranelement um den Gegendruck der nachfolgenden Stufe reduziert ist.

Um eine Umschaltung zwischen einem Single-Pass Betrieb oder einem Double-Pass Betrieb in einer Anlage zu ermöglichen, ist in der Regel eine aufwändige Verrohrung erforderlich. Es ist prinzipiell denkbar, ein für den Single-Pass Betrieb nicht benötigtes Umkehrosmosemodul ungenutzt zu lassen und dementsprechend abzukoppeln. Allerdings ist in so einem Fall eine Konservierung der abgekoppelten Stufe erforderlich und es muss sichergestellt sein, dass die abgekoppelte Stufe von dem Permeatbereich abgetrennt ist, um eine Kontamination des Permeats auszuschließen.

In einer älteren, nicht vorveröffentlichten deutschen Patentanmeldung mit dem amtlichen Aktenzeichen DE 10 2022 110 478.8 ist ein vorteilhaftes Umschaltventil zum Umschalten zwischen einem permeatgestuften Betrieb und einem konzentratgestuften Betrieb einer mehrstufigen Umkehrosmoseanlage beschrieben. Dieses Umschaltventil ermöglicht insbesondere ein manuelles Umschalten in einer mobilen Wasseraufbereitungsanlage auf eine sehr robuste, betriebssichere und kostengünstige Weise.

Es gibt jedoch Fälle, in denen ein automatisches Umschalten zwischen Single-Pass und Double-Pass Betrieb in einer mobilen Wasseraufbereitungsanlage wünschenswert ist. Dabei soll eine solche Anlage mit möglichst wenigen Komponenten und einer möglichst einfachen Verrohrung realisiert werden.

US 2022/0177340 A1 offenbart eine Wasseraufbereitungsanlage mit drei Umkehrosmosemodulen zur Reinigung von Wasser, das bei der Herstellung von Halbleiterchips verwendet wird. Zwei Umkehrosmosemodule sind in einer Permeatstufung in Reihe zueinander angeordnet, um das Wasser für die Halbleiterproduktion zu reinigen. Das dritte Umkehrosmosemodul dient zum Reinigen des Konzentrats aus dem zweiten Umkehrosmosemodul, damit dieses Konzentrat zumindest teilweise wieder als eingangsseitiges Rohwasser genutzt werden kann. Eine ähnliche Anlage ist in CN 113697978 A offenbart.

Eine weitere mehrstufige Anlage ist in US 5,338,457 offenbart. Hier sind ein erstes und ein zweites Umkehrosmosemodul mit einer Konzentratstufung in Reihe zueinander angeordnet. Das gesammelte Permeat wird in einem dritten Umkehrosmosemodul nochmals gereinigt.

Weitere Wasseraufbereitungsanlagen mit einem oder mehreren Umkehrosmosemodulen sind in EP 0 592 372 A2, US 6,461,514 B1, AU 2008202302 A1, US 6,267,891 B1, US 10,882,760 B1, WO 2013/128407 A1 oder US 2013/0345488 A1 offenbart. Keine der bekannten Anlagen ermöglicht jedoch eine einfache und schnelle Umschaltung zwischen einem Single-Pass Betrieb und einem Double-Pass Betrieb.

Vor diesem Hintergrund ist es eine Aufgabe der vorliegenden Erfindung, eine mobile Wasseraufbereitungsanlage anzugeben, die eine Umschaltung zwischen einem Single-Pass Betrieb und einem Double-Pass Betrieb auf einfache und effiziente Weise möglich macht. Wünschenswert ist, dass die Wasseraufbereitungsanlage die Umschaltung mit wenigen Komponenten ermöglicht. Es ist insbesondere eine Aufgabe der Erfindung, eine mobile Wasseraufbereitungsanlage anzugeben, die eine automatische Umschaltung zwischen dem Single-Pass Betrieb und dem Double-Pass Betrieb ermöglicht. Des Weiteren ist es eine Aufgabe der Erfindung, eine mobile Wasseraufbereitungsanlage anzugeben, die eine Umschaltung zwischen Single-Pass Betrieb und Double-Pass Betrieb ermöglicht, ohne dass Rohrleitungen in dem einen oder anderen Betrieb verschlossen und konserviert werden müssen.

Gemäß einem Aspekt der Erfindung wird zur Lösung dieser Aufgaben eine mobile Wasseraufbereitungsanlage vorgeschlagen, mit einem Anlagenzulauf zum Zuführen von Rohwasser, mit einem ersten Anlagenausgang zum Entnehmen von gereinigtem Wasser, mit einem ersten Umkehrosmosemodul, das einen ersten Eingang, einen ersten Permeatausgang und einen ersten Konzentratausgang aufweist, mit einem zweiten Umkehrosmosemodul, das einen zweiten Eingang, einen zweiten Permeatausgang und einen zweiten Konzentratausgang aufweist, mit einem dritten Umkehrosmosemodul, das einen dritten Eingang, einen dritten Permeatausgang und einen dritten Konzentratausgang aufweist, ferner mit einem ersten Sperrventil und einem zweiten Sperrventil, wobei der Anlagenzulauf mit dem ersten Eingang verbunden ist, um das erste Umkehrosmosemodul mit Rohwasser zu speisen, wobei der Anlagenzulauf ferner mit dem zweiten Eingang verbunden ist, um das zweite Umkehrosmosemodul wahlweise mit Rohwasser zu speisen, wobei der erste Konzentratausgang mit dem zweiten Konzentratausgang und mit dem dritten Eingang verbunden ist, so dass der dritte Eingang mit Konzentrat aus dem ersten Umkehrosmosemodul und mit Konzentrat aus dem zweiten Umkehrosmosemodul gespeist werden kann, wobei der erste Permeatausgang mit dem dritten Permeatausgang und ferner über das erste Sperrventil mit dem zweiten Eingang verbunden ist, und wobei der zweite Permeatausgang mit dem Anlagenausgang und ferner über das zweite Sperrventil mit dem ersten Permeatausgang und dem dritten Permeatausgang verbunden ist.

Die neue Wasseraufbereitungsanlage besitzt dementsprechend zumindest drei Umkehrosmosemodule, von denen jedes eine semipermeable Membran aufweist, durch die das am Eingang zugeführt Rohwasser in Abhängigkeit von dem Differenzdruck über der Membran diffundieren kann, um das Rohwasser in den Permeatstrom und den Konzentratstrom aufzuteilen. Die Permeatmenge kann in bevorzugten Ausführungsbeispielen über eine oder mehrere Pumpen und Ventile eingestellt werden. Aufgrund der angegebenen Verbindungen bilden die zumindest drei Umkehrosmosemodule zwei in Reihe geschalteten Membranstufen. Je nach der gewählten Betriebsart durchläuft das am Anlagenzulauf zugeführte Rohwasser die Umkehrosmosemodule in unterschiedlicher Weise.

Für einen Single-Pass Betrieb kann das erste Sperrventil geschlossen und das zweite Sperrventil geöffnet werden mit der Folge, dass das erste Umkehrosmosemodul und das zweite Umkehrosmosemodul parallel geschaltet sind und das am Anlagenzulauf zugeführte Rohwasser parallel erhalten. Da der erste Konzentratausgang und der zweite Konzentratausgang jeweils mit dem Eingang des dritten Umkehrosmosemoduls verbunden sind, werden die Konzentratströme aus dem ersten und zweiten Umkehrosmosemodul zusammengeführt. Die zusammengeführten Konzentratströme speisen den Eingang des dritten Umkehrosmosemoduls. Das dritte Umkehrosmosemodul erzeugt aus den zusammengeführten Konzentratströmen einen Permeatstrom, der über das geöffnete zweite Sperrventil dem Anlagenausgang zugeführt ist. In gleicher Weise ist der erste Permeatstrom vom Permeatausgang des ersten Umkehrosmosemoduls über das geöffnete zweite Sperrventil dem Anlagenausgang zugeführt. Da der zweite Permeatausgang mit dem Anlagenausgang verbunden ist, erreicht auch der Permeatstrom des zweiten Umkehrosmosemoduls den Anlagenausgang. Folglich sind die Permeatströme aus den drei Umkehrosmosemodulen am Anlagenausgang zusammengeführt. Das erste Umkehrosmosemodul und das zweite Umkehrosmosemodul sind in diesem Single-Pass Betrieb parallel zueinander angeordnet. Das dritte Umkehrosmosemodul ist konzentratgestuft zu dem ersten und zweiten Umkehrosmosemodul angeordnet. Das Permeat am Anlagenausgang hat jeweils eine Membranstufe durchlaufen, ist also einmalig durch eine semipermeable Membran diffundiert. Die Permeatmenge ist vergleichsweise hoch, weil sich die Permeatströme aus den drei Umkehrosmosemodulen addieren.

Für einen Double-Pass Betrieb kann das erste Sperrventil geöffnet und das zweite Sperrventil geschlossen werden mit der Folge, dass die Permeatströme aus dem ersten Umkehrosmosemodul und dem dritten Umkehrosmosemodul nicht mehr zu dem Anlagenausgang gelangen. Stattdessen speisen die Permeatströme aus dem ersten Umkehrosmosemodul und dem dritten Umkehrosmosemodul nun über das geöffnete erste Sperrventil den Eingang des zweiten Umkehrosmosemoduls. Dementsprechend hat das Permeat am Permeatausgang des zweiten Umkehrosmosemoduls zwei Membranstufen durchlaufen. Das erste und dritte Umkehrosmosemodul sind bei der genannten Betriebsstellung der Absperrventile jeweils permeatgestuft in Reihe zu dem zweiten Umkehrosmosemodul angeordnet. Zusätzlich sind das erste und dritte Umkehrosmosemodul in dieser Betriebsart konzentratgestuft in Reihe zueinander angeordnet, was zu einer hohen Effizienz beiträgt.

Die neue Wasseraufbereitungsanlage ermöglicht eine hohe Permeatproduktion bei geringem Verrohrungsaufwand und benötigt nur wenige Sensoren. In einigen bevorzugten Ausführungsbeispielen genügt ein einzelner Drucksensor oder Volumenstromsensor am Permeatausgang des zweiten Umkehrosmosemoduls für eine effiziente Regelung, weil der zweite Permeatausgang in beiden Betriebsarten mit dem Anlagenausgang verbunden ist. Somit ist der Volumenstrom am Permeatausgang des zweiten Umkehrosmosemoduls in beiden Betriebsarten repräsentativ für den gesamten Permeatstrom der neuen Wasseraufbereitungsanlage. Mit anderen Worten wird hier nur ein Regelstellglied für die Regelung der beiden Betriebsarten Single Pass und Double Pass benötigt. Vorteilhaft ist darüber hinaus, dass keine Sensorik im Hochdruckbereich zwischen aufeinanderfolgenden Membranstufen erforderlich ist und dementsprechend in den bevorzugten Ausführungsbeispielen auch keine Sensoren zwischen den aufeinanderfolgenden Umkehrosmosemodulen angeordnet sind.

Die Vermischung der Konzentratströme aus dem ersten und zweiten Umkehrosmosemodul am Eingang des dritten Umkehrosmosemoduls trägt vorteilhaft zu einer hohen Permeatausbeute in dem dritten Umkehrosmosemodul bei niedrigem Druck bei. Insbesondere im Double-Pass Betrieb ist die Schadstoffkonzentration des Wassers am Eingang des dritten Umkehrosmosemoduls bereits reduziert, weil das Konzentrat aus dem zweiten Umkehrosmosemodul bereits die Membranstufe im ersten Umkehrosmosemodul durchlaufen hat.

Die neue Wasseraufbereitungsanlage vermeidet unabhängig von der gewählten Betriebsart hohe Drücke in den Permeatleitungen sowie einen hohen Gegendruck im Permeat zwischen der ersten und der jeweils stromabwärts nachfolgenden Membranstufe. Insgesamt ermöglicht die neue Wasseraufbereitungsanlage daher auf kostengünstige Weise einen hohen Wirkungsgrad, der hier definiert ist als das Verhältnis von Permeatstrom zu eingangsseitigem Rohwasserstrom.

Ein weiterer Vorteil der neuen Wasseraufbereitungsanlage ist, dass sowohl im Single-Pass Betrieb als auch im Double-Pass Betrieb alle Membranen der drei Umkehrosmosemodule durchströmt werden. Dies vermeidet Konservierungsaufwand für "ungenutzte" Membranstufen.

Die oben genannten Aufgaben sind daher vollständig gelöst.

In einer bevorzugten Ausgestaltung besitzt die neue Wasseraufbereitungsanlage ein drittes Sperrventil, das in einer Rohrleitung zwischen dem erstem Eingang und dem zweitem Eingang angeordnet ist, um den zweiten Eingang wahlweise von dem ersten Eingang fluidisch zu trennen.

In dieser Ausgestaltung ist das dritte Sperrventil eingerichtet, den Eingang des zweiten Umkehrosmosemoduls wahlweise von dem Anlagenzulauf fluidisch zu trennen, so dass das am Anlagenzulauf zugeführte Rohwasser den Eingang des zweiten Umkehrosmosemoduls nicht mehr erreichen kann. Das dritte Sperrventil ermöglicht auf einfache und kostengünstige Weise, die Parallelanordnung des ersten und zweiten Umkehrosmosemoduls aufzuheben, wenn der Double-Pass Betrieb gewünscht ist und das erste und zweite Sperrventil entsprechend der obigen Erläuterungen geöffnet bzw. geschlossen sind. Dementsprechend ermöglicht diese Ausgestaltung einen wahlweisen Double-Pass Betrieb mit einem einzigen Rohwasser-Anlagenzulauf. Anschaulich gesprochen genügt in dieser Ausgestaltung beispielsweise eine einzige Schlauchkupplung oder ein sonstiger Anschluss zum Zuführen von Rohwasser in die neue Wasseraufbereitungsanlage. Alternativ kann die neue Wasseraufbereitungsanlage in anderen Ausgestaltungen mit mehreren Anlagenzuläufen zum Zuführen von Rohwasser ausgebildet sein, wie weiter unten noch erläutert ist. Die hier beschriebene Ausgestaltung trägt zu einer kompakten Bauform und zu einer sehr komfortablen Bedienung der neuen Anlage vorteilhaft bei.

In einer weiteren Ausgestaltung ist das dritte Sperrventil ein Rückschlagventil.

Vorteilhaft ist das Rückschlagventil hier in einer Rohrleitung angeordnet, die den ersten Eingang und den zweiten Eingang fluidisch verbindet. Ein Rückschlagventil ermöglicht auf sehr einfache und kostengünstige Weise eine automatische fluidische Trennung des ersten und zweiten Eingangs für den oben beschriebenen Double-Pass Betrieb. Prinzipiell kann das dritte Sperrventil in anderen Ausgestaltungen aber ein manuell, hydraulisch, pneumatisch und/oder elektrisch betätigtes Sperrventil sein.

In einer weiteren Ausgestaltung weist der Anlagenzulauf einen ersten Rohwasserpfad und einen separaten zweiten Rohwasserpfad auf, wobei der erste Rohwasserpfad mit dem ersten Eingang verbunden ist, und wobei der zweite Rohwasserpfad mit dem zweiten Eingang verbunden ist.

In dieser Ausgestaltung besitzt die neue Wasseraufbereitungsanlage zumindest zwei Rohwasserleitungen, die in einigen Ausführungsbeispielen jeweils als Schlauchkupplungen ausgebildet sein können. Die zwei Leitungen bilden separate Rohwasserpfade und ermöglichen die (wahlweise) Speisung des zweiten Eingangs mit Rohwasser getrennt von dem ersten Eingang.

In einer weiteren Ausgestaltung besitzt die Wasseraufbereitungsanlage einen zweiten Anlagenausgang, der mit dem Konzentratausgang des dritten Umkehrosmosemoduls verbunden ist.

In dieser Ausgestaltung wird das Konzentrat aus der Anlage unabhängig von der gewählten Betriebsart mit allen Schadstoffen an einem definierten Anlagenausgang, gewissermaßen zentral abgeführt. Die Ausgestaltung ermöglicht einen einfachen und prozesssicheren Betrieb und eine kompakte Bauform.

In einer weiteren Ausgestaltung besitzt die Wasseraufbereitungsanlage ein Druckregelventil, das an dem Konzentratausgang des dritten Umkehrosmosemoduls angeordnet ist.

In vorteilhafter Weise ist das Druckregelventil in dieser Ausgestaltung eingerichtet, die Druckverhältnisse an den drei gekoppelten Umkehrosmosemodulen einzustellen und somit alle Permeat- und Konzentratströme in der Anlage zu regeln. Die Ausgestaltung ermöglicht eine sehr kostengünstige Realisierung und einen besonders effizienten Betrieb.

In einer weiteren Ausgestaltung besitzt die Wasseraufbereitungsanlage eine erste Pumpe, insbesondere eine Hochdruckpumpe, die zwischen dem Anlagenzulauf und dem ersten Eingang angeordnet ist.

Die erste Pumpe ist in der Lage, den gewünschten Differenzdruck über der Membran des ersten Umkehrosmosemoduls zu erzeugen. Die Ausgestaltung ermöglicht einen autarken Betrieb der neuen Wasseraufbereitungsanlage unabhängig von externen Pumpen. Vorteilhaft besitzt die neue Wasseraufbereitungsanlage

In bevorzugten Ausführungsbeispielen einen Tragrahmen und die erste Pumpe ist an dem Tragrahmen befestigt, so dass die Anlage mit dem Tragrahmen als ein kompaktes Gerät zu einem Einsatzort transportiert werden kann.

In einer weiteren Ausgestaltung besitzt die Wasseraufbereitungsanlage eine zweite Pumpe, die zwischen dem Anlagenzulauf und dem zweiten Eingang angeordnet ist.

In dieser Ausgestaltung wird der Differenzdruck in dem zweiten Umkehrosmosemodul mit einer Pumpe erzeugt, die dem zweiten Umkehrosmosemodul zugeordnet ist. Bevorzugt werden zwei separate Pumpen verwendet, um die gewünschten Differenzdrücke in dem ersten Umkehrosmosemodul und in dem zweiten Umkehrosmosemodul zu erzeugen. Diese Ausgestaltung ermöglicht einen effizienten Betrieb unabhängig von der jeweils gewählten Betriebsart. In einigen Ausführungsbeispielen ist das dritte Sperrventil zwischen den jeweiligen Saugeingängen der zwei Pumpen angeordnet. In besonders bevorzugten Ausführungsbeispielen ist das dritte Sperrventil näher an dem Saugeingang der zweiten Pumpe angeordnet als an dem Saugeingang der ersten Pumpe, um das bereits einmal gereinigte Wasser im Double-Pass Betrieb möglichst vollständig an den Saugeingang der zweiten Pumpe zu führen und "tote" Stichleitungen, in denen sich Permeat sammeln kann, zu minimieren. Generell ist es bevorzugt, wenn der Saugeingang der zweiten Pumpe fluidisch zwischen dem zweiten Sperrventil und dem dritten Sperrventil angeordnet ist, weil dies eine kompakte Bauform mit einer effizienten Verrohrung ermöglicht.

In einer weiteren Ausgestaltung besitzt die Wasseraufbereitungsanlage einen ersten Sensor, der ein erstes Sensorsignal erzeugt, das für einen Volumenstrom an dem zweiten Permeatausgang repräsentativ ist.

Bevorzugt ist der erste Sensor ein Volumenstromsensor. In dieser Ausgestaltung kann das erste Sensorsignal sehr vorteilhaft als Eingangsgröße für Regelung der Permeat- und Konzentratströme in der neuen Anlage verwendet werden, weil der Volumenstrom an dem zweiten Permeatausgang für den Gesamtausgang der Anlage repräsentativ ist. Die Ausgestaltung trägt vorteilhaft dazu bei, die Anzahl an Komponenten und das Gewicht der Anlage zu minimieren.

In einer weiteren Ausgestaltung besitzt die Wasseraufbereitungsanlage einen zweiten Sensor, der ein zweites Sensorsignal erzeugt, das für einen Fluiddruck stromabwärts von dem ersten Sperrventil und/oder stromabwärts von dem dritten Sperrventil repräsentativ ist.

Bevorzugt ist der zweite Sensor ein Drucksensor. Diese Ausgestaltung ermöglicht eine einfache Überwachung des dritten Sperrventils, was von Vorteil ist, weil das dritte Sperrventil im Double-Pass Betrieb dafür sorgt, dass das Permeat aus dem ersten und dritten Umkehrosmosemodul von dem von außen zugeführten Rohwasser getrennt ist. Die Überwachung trägt daher vorteilhaft zu einem prozesssicheren Betrieb der neuen Wasseraufbereitungsanlage bei.

In einer weiteren Ausgestaltung besitzt die Wasseraufbereitungsanlage einen dritten Sensor, der ein drittes Sensorsignal erzeugt, das für eine Wasserqualität des gereinigten Wassers an dem ersten Anlagenausgang repräsentativ ist.

In dieser Ausgestaltung kann die Wasserqualität am Ausgang der Anlage auf sehr komfortable Weise überwacht werden. In bevorzugten Ausführungsbeispielen erzeugt der dritte Sensor ein Sensorsignal, das für zumindest eine der nachfolgenden Werte repräsentative ist: Salzgehalt, Konzentrationen von Nitrat, Phosphat, Sulfat, Ammonium, Kohlenstoff, Sauerstoff, Metallen wie insbesondere Eisen, pH-Wert, Leitfähigkeit.

In einer weiteren Ausgestaltung sind das erste und das zweite Sperrventil elektrisch steuerbar sind, insbesondere elektrisch verstellbare Kugelventile.

Diese Ausgestaltung ermöglicht einen sehr komfortablen und prozesssicheren Betrieb der neuen Wasseraufbereitungsanlage.

In einer weiteren Ausgestaltung besitzt die Wasseraufbereitungsanlage eine Steuerung, die dazu eingerichtet ist, das erste und das zweite Sperrventil anzusteuern, um zwischen einem Single-Pass oder einen Double-Pass Betrieb umzuschalten. Vorzugsweise ist die Steuerung dazu eingerichtet, das erste und das zweite Sperrventil in Abhängigkeit von dem dritten Sensorsignal anzusteuern, um automatisch zwischen einem Single-Pass oder einem Double-Pass Betrieb umzuschalten.

Diese Ausgestaltung ermöglicht einen sehr komfortablen und effizienten Betrieb der neuen Wasseraufbereitungsanlage. Ein automatisches Umschalten zwischen den beiden Betriebsarten in Abhängigkeit von dem dritten Sensorsignal gewährleistet darüber hinaus eine hohe Ausbeute verbunden mit einer hohen Wasserqualität.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht auf ein Ausführungsbeispiel der neuen Wasseraufbereitungsanlage,
- Fig. 2: ein vereinfachtes Fließschema der neuen Wasseraufbereitungsanlage gemäß einem bevorzugten Ausführungsbeispiel,
- Fig. 3: das Fließschema aus Fig. 2 in einem Single-Pass Betrieb,
- Fig. 4: das Fließschema aus Fig. 2 in einem Double-Pass Betrieb, und
- Fig. 5: ein vereinfachtes Fließschema der neuen Wasseraufbereitungsanlage gemäß einem weiteren Ausführungsbeispiel.

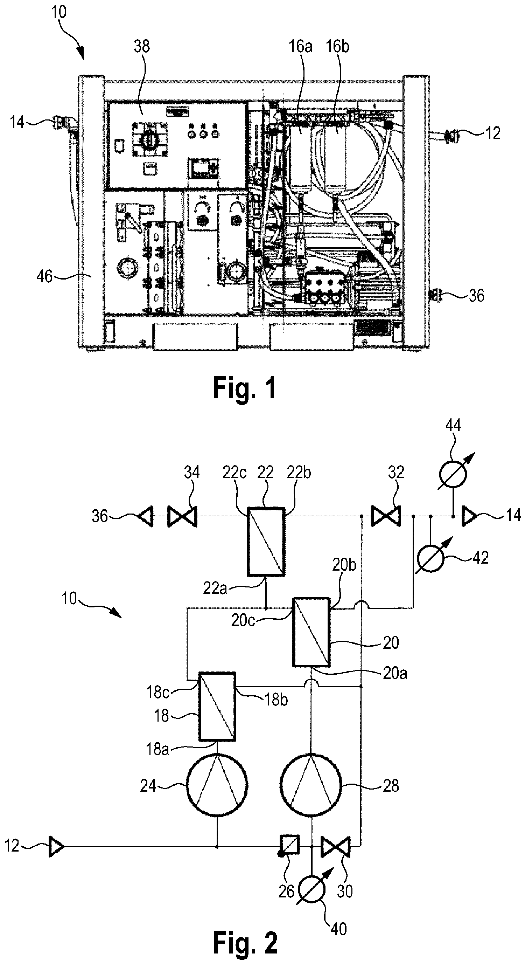

In den Figs. 1 und 2 ist ein Ausführungsbeispiel der neuen Wasseraufbereitungsanlage in seiner Gesamtheit mit der Bezugsziffer 10 bezeichnet. Gleiche Bezugszeichen bezeichnen jeweils gleiche Elemente.

Die Anlage 10 besitzt einen Anlagenzulauf 12 zum Zuführen von Rohwasser, das beispielsweise ungereinigtes Oberflächenwasser sein kann. Das Rohwasser kann aus einem Fluss, See oder Meer stammen und natürliche Keime, einen hohen Salzgehalt und/oder diverse Verunreinigungen und Schadstoffe einschließlich Schwermetallen, Düngemittelresten, militärischen Kampfstoffen u.a. beinhalten. Ein bevorzugtes Einsatzgebiet der neuen Wasseraufbereitungsanlage ist im Rahmen der Trinkwassergewinnung nach einer Überschwemmung, einem Erdbeben, einem militärischen Einsatz mit Kampfstoffen und/oder Zerstörung der Infrastruktur oder nach einer anderen Katastrophe. Der Anlagenzulauf 12 beinhaltet hier eine Schlauchkupplung, an die ein Ansaugschlauch (nicht dargestellt) angeschlossen werden kann.

Die Anlage 10 besitzt ferner einen ersten Anlagenausgang 14 zum Entnehmen von gereinigtem Wasser. In einigen bevorzugten Ausführungsbeispielen besitzt das gereinigte Wasser bereits Trinkwasserqualität. In anderen Ausführungsbeispielen kann das gereinigte Wasser weiteren Aufbereitungs- und/oder Reinigungsstufen zugeführt werden, um Trinkwasserqualität zu erhalten. In den bevorzugten Ausführungsbeispielen besitzt die Wasseraufbereitungsanlage einen oder mehrere Vorfilter 16a, 16b, die beispielweise als Filamentfilter ausgebildet sein können, wie sie in der eingangs genannten EP 1 690 579 A1 beschrieben sind.

Die Wasseraufbereitungsanlage 10 besitzt ein erstes Umkehrosmosemodul 18 mit einem ersten Eingang 18a, einem ersten Permeatausgang 18b und einem ersten Konzentratausgang 18c. In an sich bekannter Weise besitzt das Umkehrosmosemodul 18 eine semipermeable Membran, durch die am Eingang 18a zugeführtes Rohwasser (Feed) in Abhängigkeit von einem Differenzdruck über der Membran teilweise diffundieren kann, um als Permeat an dem Permeatausgang 18b auszutreten. Das Konzentrat mit den konzentrierten Schadstoffen und Verunreinigungen tritt in an sich bekannter Weise am Konzentratausgang 18c aus.

Die Wasseraufbereitungsanlage 10 besitzt ein zweites Umkehrosmosemodul 20 mit einem zweiten Eingang 20a, einem zweiten Permeatausgang 20b und einem zweiten Konzentratausgang 20c sowie ein drittes Umkehrosmosemodul 22 mit einem dritten Eingang 22a, einem dritten Permeatausgang 22b und einem dritten Konzentratausgang 22c. Wie man in Fig. 2 erkennen kann, ist der Anlagenzulauf 12 über eine erste Pumpe 24 mit dem ersten Eingang 18a verbunden ist, um das erste Umkehrosmosemodul 18 mit Rohwasser zu speisen. Der erste Konzentratausgang 18c ist mit dem zweiten Konzentratausgang 20c und mit dem dritten Eingang 22a verbunden, so dass der dritte Eingang 22a mit Konzentrat aus dem ersten Umkehrosmosemodul 18 und zugleich mit Konzentrat aus dem zweiten Umkehrosmosemodul 20 gespeist werden kann. Die Umkehrosmosemodule 18, 20 sind hier also parallel mit dem dritten Eingang 22a des dritten Umkehrosmosemoduls 22 verbunden.

Der Anlagenzulauf 12 ist hier ferner über ein Rückschlagventil 26 und eine zweite Pumpe 28 mit dem zweiten Eingang 20a verbunden ist, um das zweite Umkehrosmosemodul 20 parallel zu dem ersten Umkehrosmosemodul 18 wahlweise mit Rohwasser zu speisen. Anstelle des bevorzugten Rückschlagventils 26 könnte auch ein anderes Sperrventil verwendet sein, etwa ein handbetätigtes oder ein elektrisch, hydraulisch oder pneumatisch betätigtes Absperrventil.

Der erste Permeatausgang 18b ist mit dem dritten Permeatausgang 22b und ferner über ein Sperrventil 30 und die Pumpe 28 mit dem zweiten Eingang 20a verbunden. Dementsprechend kann das Permeat aus dem ersten Umkehrosmosemodul 18 und dem dritten Umkehrosmosemodul 22 wahlweise, nämlich in Abhängigkeit von dem Betriebszustand des Sperrventils 30 an den Eingang 20a des zweiten Umkehrosmosemoduls 20 geführt werden. Der zweite Permeatausgang 20b ist mit dem Anlagenausgang 14 verbunden. Außerdem ist der zweite Permeatausgang 20b über ein weiteres Sperrventil 32 mit dem ersten Permeatausgang 18b und dem dritten Permeatausgang 22b verbunden.

Der Konzentratausgang 22c des dritten Umkehrosmosemoduls 22 ist über ein Druckregelventil 34 mit einem zweiten Anlagenausgang 36 verbunden. Der Anlagenausgang 36 beinhaltet in diesem Ausführungsbeispiel eine (weitere) Schlauchkupplung, an die ein Schlauch (hier nicht dargestellt) zum Abführen des Konzentrats der Wasseraufbereitungsanlage 10 mit allen Verunreinigungen und Schadstoffen angeschlossen werden kann.

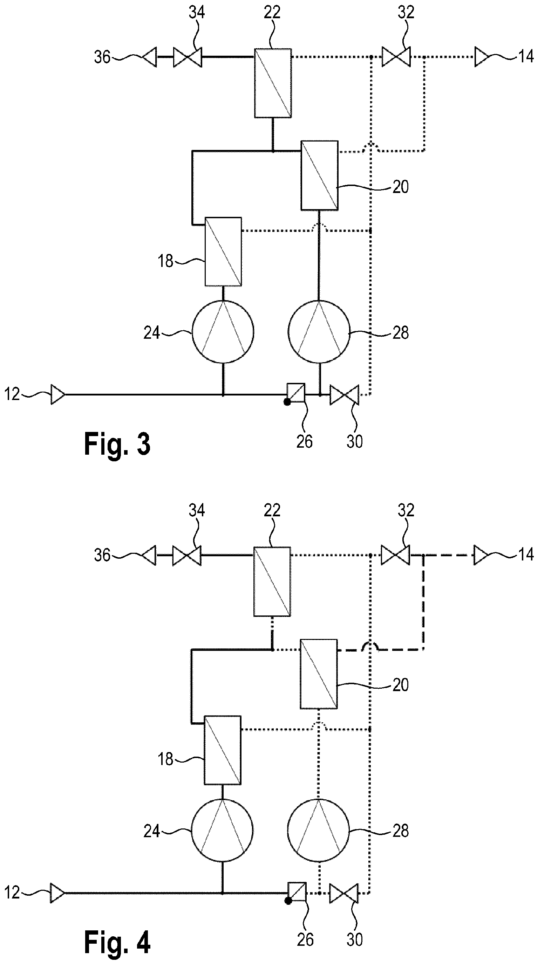

Fig. 3 zeigt die Wasseraufbereitungsanlage 10 mit dem Fließschema entsprechend Fig. 2 in einem Single-Pass Betrieb. In diesem Fall ist das erste Sperrventil 30 geschlossen und das zweite Sperrventil 32 ist geöffnet. Das am Anlagenzulauf 12 zugeführte Rohwasser und die Konzentratströme sind hier mit einer fetten durchgezogenen Linie dargestellt, während das Permeat aus den Umkehrosmosemodulen 18, 20, 22 jeweils mit einer gepunkteten Linie dargestellt ist. Im Übrigen gleiche Bezugszeichen dieselben Elemente wie zuvor.

Das zu reinigenden Rohwasser wird der Anlage 10 über den Anlagenzulauf 12 zugeführt und versorgt die beiden im Single-Pass Betrieb parallel arbeitenden Pumpen 24, 28. Die Pumpe 24 erzeugt einen Differenzdruck über der Membran des ersten Umkehrosmosemoduls 18. Die Pumpe 28 erzeugt einen Differenzdruck über der Membran des zweiten Umkehrosmosemoduls 20. Die Konzentratströme aus dem ersten Umkehrosmosemodul 18 und dem zweiten Umkehrosmosemodul 20 sind in einer Sammelleitung am oder vor dem Eingang des dritten Umkehrosmosemoduls 22 zusammengeführt. Das Konzentrat aus dem dritten Umkehrosmosemodul 22 wird über das Druckregelventil 34 zu dem Anlagenausgang 36 abgeleitet. Das Permeat aus dem ersten Umkehrosmosemodul 18 und das Permeat aus dem dritten Umkehrosmosemodul 22 wird in einer weiteren Sammelleitung zusammengeführt und über das geöffnete Sperrventil 32 zu dem Anlagenausgang 14 geführt. Stromabwärts von dem Sperrventil 32 trifft das Permeat aus den Umkehrosmosemodulen 18, 22 auf das Permeat aus dem zweiten Umkehrosmosemodul 20. Dies bedeutet, dass das Permeat aus allen drei Umkehrosmosemodulen 18, 20, 22 in einer Sammelleitung am Anlagenausgang 14 zusammengeführt ist. Alle drei Permeatströme haben jeweils einmal eine Membran passiert.

Fig. 4 zeigt die Wasseraufbereitungsanlage 10 mit dem Fließschema entsprechend Fig. 2 in einem Double-Pass Betrieb. In diesem Fall ist das erste Sperrventil 30 geöffnet und das zweite Sperrventil 32 ist geschlossen. Das am Anlagenzulauf 12 zugeführte Rohwasser und die Konzentratströme sind erneut mit einer fetten durchgezogenen Linie dargestellt, während das erste Permeat aus den Umkehrosmosemodulen 18, 22 wiederum mit einer gepunkteten Linie dargestellt ist. Das Permeat aus dem zweiten Umkehrosmosemodul 20 ist mit einer gestrichelten Linie dargestellt und unterscheidet sich von dem Permeat aus den Umkehrosmosemodulen 18, 22, weil es in dem Umkehrosmosemodul 20 zum zweiten Mal eine Membran passiert hat.

Das zu reinigenden Rohwasser wird der Anlage 10 auch im Double-Pass Betrieb über den Anlagenzulauf 12 zugeführt, versorgt in diesem Fall aber nur die Pumpe 24 am Eingang des ersten Umkehrosmosemoduls 18. Die Pumpe 28 am Eingang des zweiten Umkehrosmosemoduls 20 ist hier über das Rückschlagventil 26 fluidisch von dem Rohwasserstrom getrennt. Vorteilhaft wird dafür von den Umkehrosmosemodulen 18, 20 so viel Permeat produziert, dass der Druck 40 hinter dem Rückschlagventil 26 und damit vor der Pumpe 24 höher ist als vor dem Rückschlagventil 26 im Zulauf 12. Im Double Pass Betrieb ist dieser Permeatdruck 40 vorteilhaft die Sollgröße und wird durch die Verstellung des Regelventils 34 eingestellt.

Der Konzentratstrom aus dem ersten Umkehrosmosemodul 18 ist ebenso wie im Single-Pass Betrieb dem Eingang des dritten Umkehrosmosemoduls 22 zugeführt. Der Permeatstrom des ersten Umkehrosmosemoduls 18 gelangt über die Sammelleitung am Ausgang des ersten und dritten Umkehrosmosemoduls 18, 22 und das geöffnete Sperrventil 30 an den Eingang des zweiten Umkehrosmosemoduls 20. Die Pumpe 28 setzt das Permeat am Eingang des zweiten Umkehrosmosemoduls 20 unter Druck. Der Permeatstrom aus dem zweiten Umkehrosmosemodul 20 hat nun zwei Mal eine Membranfläche passiert (Double-Pass Betrieb) und gelangt stromabwärts von dem geschlossenen Sperrventil 32 zu dem Anlagenausgang 14.

Das Konzentrat aus dem zweiten Umkehrosmosemodul 20 besitzt aufgrund des vorherigen Durchlaufs durch das erste Umkehrosmosemodul 18 eine geringere Schadstoffkonzentration als das am Anlagenzulauf 12 zugeführte Rohwasser. Es mischt sich in der Sammelleitung am oder vor dem Eingang des dritten Umkehrosmosemoduls 22 mit dem Konzentratstrom aus dem ersten Umkehrosmosemodul 18, was zur Folge hat, dass sich die Schadstoffkonzentration am Eingang des dritten Umkehrosmosemoduls 22 im Vergleich zu dem Single-Pass betrieb aus Fig. 3 reduziert. Dieser Effekt trägt vorteilhaft zu einer hohen Effizienz der Wasseraufbereitungsanlage 10 bei. Das Konzentrat aus dem dritten Umkehrosmosemodul 22 wird wiederum über das Druckregelventil 34 zu dem Anlagenausgang 36 abgeleitet. Das Permeat aus dem dritten Umkehrosmosemodul 22 gelangt in die Sammelleitung stromaufwärts von dem geschlossenen Sperrventil 32 und mischt sich dort mit dem Permeat aus dem ersten Umkehrosmosemodul 18.

Wie man im Vergleich der beiden Darstellungen in den Figs. 3 und 4 erkennen kann, werden die drei Umkehrosmosemodule 18, 20, 22, beide Pumpen 24, 28 und praktisch alle Leitungsabschnitte der Wasseraufbereitungsanlage 10 in beiden Betriebsarten jeweils durchströmt. Eine Konservierung eines nicht genutzten Abschnitts ist daher nicht erforderlich.

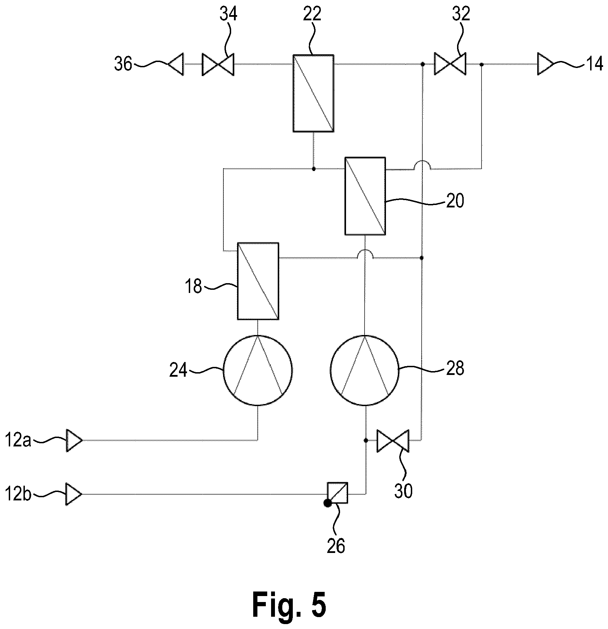

Fig. 5 zeigt ein weiteres Ausführungsbeispiel 10`. Gleiche Bezugszeichen bezeichnen dieselben Elemente wie zuvor. Die Anlage 10 unterscheidet sich von der Anlage 10 im Wesentlichen dadurch, dass sie zwei fluidisch getrennte Rohwasserzuläufe 12a, 12b besitzt, die beispielsweise jeweils eine separate Schlauchkupplung zum Anschließen eines Rohwasserschlauchs (hier nicht dargestellt) beinhalten können. Anstelle des hier dargestellten Rückschlagventils 26 könnte der zweite Rohwasserzulauf 12b im Double-Pass-Betrieb mit einem manuell betätigten oder einem elektrisch, hydraulisch oder pneumatisch betätigten Absperrventil verschlossen werden. Alternativ oder ergänzend kann es in einigen Ausführungsbeispielen ausrechend sein, den zweiten Rohwasserzulauf 12b im Double-Pass-Betrieb mit der Schlauchkupplung zu verschließen, so dass in diesen Fällen das Sperrventil 26 ganz entfallen kann.

In einigen bevorzugten Ausführungsbeispielen besitzt die neue Wasseraufbereitungsanlage 10 oder 10' eine Steuerung 38, die insbesondere dazu eingerichtet ist, die Sperrventile 30, 32 elektrisch (alternativ hydraulisch oder pneumatisch) anzusteuern, um die Wasseraufbereitungsanlage 10, 10' wahlweise im Single-Pass Betrieb oder im Double-Pass Betrieb zu betreiben. Vorteilhaft besitzt die Wasseraufbereitungsanlage 10, 10' in einigen Ausführungsbeispielen einen Drucksensor 40, der ein Sensorsignal liefert, das für den Fluiddruck stromaufwärts von dem Rückschlagventil 26 und damit stromabwärts von dem ersten Sperrventil (30) repräsentativ ist. Ein solches Sensorsignal ermöglich eine einfache und zuverlässige Überwachung des Rückschlagventils 26.

Des Weiteren besitzt die Wasseraufbereitungsanlage 10, 10' in einigen Ausführungsbeispielen einen Sensor 42, der ein Sensorsignal erzeugt, das für einen Volumenstrom an dem ersten Anlagenausgang 14 und/oder an dem zweiten Permeatausgang 20b repräsentativ ist. Die Steuerung 38 ist vorteilhaft dazu eingerichtet, die Pumpen 24, 28 in Abhängigkeit von dem Sensorsignal zu steuern.

Im Single-Pass Betrieb kann die Steuerung in einer vorteilhaften Implementierung folgendermaßen sein:
- Sollgröße ist der Volumenstrom entsprechend dem Sensor 42. Dieser Volumenstrom wird durch Verstellung des Druckregelventils 34 durch die Steuerung 38 eingestellt. Der Druck 40 wird in einigen Ausführungsbeispielen in dieser Betriebsart nicht ausgewertet.
- Vorteilhaft kann zur Absicherung noch ein optionaler Drucksensor (hier nicht dargestellt) verwendet sein, mit dem überwacht wird, dass der maximal zulässige Druck hinter der Pumpe 24 nicht überschritten wird.

Im Double-Pass Betrieb kann die Steuerung in einer vorteilhaften Implementierung folgendermaßen sein:
- Sollgröße ist hier der Druck entsprechend dem Sensor 40. Dieser wird durch Verstellung des Druckregelventils 34 durch die Steuerung 38 eingestellt. Der Volumenstrom am Sensor 42 muss in dieser Betriebsart nicht ausgewertet werden bzw. wird in bevorzugten Ausführungsbeispielen in dieser Betriebsart nicht ausgewertet.
- Zur Absicherung kann optional ein Drucksensor verwendet sein, mit dem überwacht wird, dass der maximal zulässige Druck hinter der Pumpe 24 nicht überschritten wird.

Schließlich kann die Wasseraufbereitungsanlage 10, 10' in einigen Ausführungsbeispielen einen Sensor 44 beinhalten, der ein drittes Sensorsignal liefert, das für die Wasserqualität des gereinigten Wassers an dem ersten Anlagenausgang 14 bzw. an dem zweiten Permeatausgang 20b repräsentativ ist. In bevorzugten Ausführungsbeispielen erzeugt der Sensor 44 ein Sensorsignal, das für zumindest eine der nachfolgenden Werte repräsentativ ist: Salzgehalt, Konzentrationen von Nitrat, Phosphat, Sulfat, Ammonium, Kohlenstoff, Sauerstoff, Metallen wie insbesondere Eisen, pH-Wert, und/oder Leitfähigkeit. In den bevorzugten Ausführungsbeispielen steuert die Steuerung 38 die Sperrventile 30, 32 in Abhängigkeit von dem dritten Sensorsignal an, um in Abhängigkeit von der Wasserqualität automatisch zwischen dem Single-Pass Betrieb und dem Double-Pass Betrieb umzuschalten.

In den bevorzugten Ausführungsbeispielen sind die zuvor beschriebenen Komponenten, insbesondere die Umkehrosmosemodule 18, 20, 22, die Sperrventile 30, 32, das Druckregelventil 34, die Sensoren 40, 42, 44 und die Steuerung 38 an einem Tragrahmen 46 befestigt, der eine Art Gehäuse für die Wasseraufbereitungsanlage 10, 10` bildet, so dass die Wasseraufbereitungsanlage 10, 10' als kompaktes Gerät an einen Einsatzort transportiert werden kann. In einigen Ausführungsbeispielen sind auch die Pumpen 24, 28 und etwaige Vorfilter 16a, 16b direkt oder indirekt an dem Tragrahmen 46 befestigt.

## Patentansprüche

1. Mobile Wasseraufbereitungsanlage zum Erzeugen von Trinkwasser in einem Katastrophengebiet, mit
- einem Anlagenzulauf (12) zum Zuführen von Rohwasser,
- einem ersten Anlagenausgang (14) zum Entnehmen von gereinigtem Wasser,
- einem ersten Umkehrosmosemodul (18), das einen ersten Eingang (18a), einen ersten Permeatausgang (18b) und einen ersten Konzentratausgang (18c) aufweist,
- einem zweiten Umkehrosmosemodul (20), das einen zweiten Eingang (20a), einen zweiten Permeatausgang (20b) und einen zweiten Konzentratausgang (20c) aufweist, und
- einem dritten Umkehrosmosemodul (22), das einen dritten Eingang (22a), einen dritten Permeatausgang (22b) und einen dritten Konzentratausgang (22c) aufweist,
- ferner mit einem ersten Sperrventil (30) und einem zweiten Sperrventil (32),
wobei der Anlagenzulauf (12) mit dem ersten Eingang (18a) verbunden ist, um das erste Umkehrosmosemodul (18) mit Rohwasser zu speisen,
wobei der Anlagenzulauf (12) ferner mit dem zweiten Eingang (20a) verbunden ist, um das zweite Umkehrosmosemodul (20) wahlweise mit Rohwasser zu speisen,
wobei der erste Konzentratausgang (18c) mit dem zweiten Konzentratausgang (20c) und mit dem dritten Eingang (22a) verbunden ist, so dass der dritte Eingang (22a) mit Konzentrat aus dem ersten Umkehrosmosemodul (18) und mit Konzentrat aus dem zweiten Umkehrosmosemodul (20) gespeist werden kann,
wobei der erste Permeatausgang (18c) mit dem dritten Permeatausgang (22c) und ferner über das erste Sperrventil (30) mit dem zweiten Eingang (20a) verbunden ist, und
wobei der zweite Permeatausgang (20b) mit dem Anlagenausgang (14) und ferner über das zweite Sperrventil (32) mit dem ersten Permeatausgang (18b) und mit dem dritten Permeatausgang (22b) verbunden ist.

2. Mobile Wasseraufbereitungsanlage nach Anspruch 1, ferner mit einem dritten Sperrventil (26), das in einer Rohrleitung zwischen dem erstem Eingang (18a) und dem zweitem Eingang (20a) angeordnet ist, um den zweiten Eingang (20a) wahlweise von dem ersten Eingang (18a) fluidisch zu trennen.

3. Mobile Wasseraufbereitungsanlage nach Anspruch 2, wobei das dritte Sperrventil (26) ein Rückschlagventil ist.

4. Mobile Wasseraufbereitungsanlage nach Anspruch 1, wobei der Anlagenzulauf (12) einen ersten Rohwasserpfad (12a) und einen separaten zweiten Rohwasserpfad (12b) aufweist, wobei der erste Rohwasserpfad (12a) mit dem ersten Eingang (18a) verbunden ist, und wobei der zweite Rohwasserpfad (12b) mit dem zweiten Eingang (20a) verbunden ist.

5. Mobile Wasseraufbereitungsanlage nach einem der Ansprüche 1 bis 4, ferner mit einem zweiten Anlagenausgang (36), der mit dem Konzentratausgang (22c) des dritten Umkehrosmosemoduls (22) verbunden ist.

6. Mobile Wasseraufbereitungsanlage nach einem der Ansprüche 1 bis 5, ferner mit einem Druckregelventil (34), das an dem Konzentratausgang (22c) des dritten Umkehrosmosemoduls (22) angeordnet ist.

7. Mobile Wasseraufbereitungsanlage nach Anspruch 6, ferner mit einer Steuerung (38), die dazu eingerichtet ist, das Druckregelventil (34) zu steuern und/oder zu regeln.

8. Mobile Wasseraufbereitungsanlage nach einem der Ansprüche 1 bis 7, ferner mit einer ersten Pumpe (24), die zwischen dem Anlagenzulauf (12) und dem ersten Eingang (18a) angeordnet ist.

9. Mobile Wasseraufbereitungsanlage nach einem der Ansprüche 1 bis 8, ferner mit einer zweiten Pumpe (28), die zwischen dem Anlagenzulauf (12) und dem zweiten Eingang (20a) angeordnet ist.

10. Mobile Wasseraufbereitungsanlage nach einem der Ansprüche 1 bis 9, ferner mit einem ersten Sensor (42), der ein erstes Sensorsignal erzeugt, das für einen Volumenstrom an dem ersten Anlagenausgang (14) und/oder an dem zweiten Permeatausgang (20b) repräsentativ ist.

11. Mobile Wasseraufbereitungsanlage nach einem der Ansprüche 1 bis 10, ferner mit einem zweiten Sensor (40), der ein zweites Sensorsignal erzeugt, das für einen Fluiddruck stromabwärts von dem ersten Sperrventil (30) und/oder dritten Sperrventil (26) repräsentativ ist.

12. Mobile Wasseraufbereitungsanlage nach einem der Ansprüche 1 bis 11, ferner mit einem dritten Sensor (44), der ein drittes Sensorsignal liefert, das für eine Wasserqualität des gereinigten Wassers an dem ersten Anlagenausgang (14) und/oder an dem zweiten Permeatausgang (20b) repräsentativ ist.

13. Mobile Wasseraufbereitungsanlage nach einem der Ansprüche 1 bis 12, wobei das erste und das zweite Sperrventil (30, 32) elektrisch steuerbar sind, insbesondere elektrisch verstellbare Kugelventile.

14. Mobile Wasseraufbereitungsanlage nach einem der Ansprüche 1 bis 13, ferner mit einer Steuerung (38), die dazu eingerichtet ist, das erste und das zweite Sperrventil (30, 32) anzusteuern, um zwischen einem Single-Pass oder einem Double-Pass Betrieb umzuschalten.
